# EUROPÄISCHE PATENTSCHRIFT

(11) **EP 0 408 832 B1**
(45) Veröffentlichungstag und Bekanntmachung des Hinweises auf die Patenterteilung: **01.06.1994**
(21) Anmeldenummer: 90105473.4
(22) Anmeldetag: 23.03.1990
(51) Int. Cl.: H01B 13/02, H02K 15/04

(54) **Vorrichtung zum Erzeugen von Drilleitern**
Device for the manufacture of stranded conductors
Dispositif de production de conducteurs toronnés

(30) Priorität: 15.07.1989 DE 3923448
(43) Veröffentlichungstag der Anmeldung: 23.01.1991
(73) Patentinhaber: LACKDRAHT UNION GMBH, D-27232 Sulingen (DE)
(72) Erfinder: Schaumburg, Wilhelm, D-3548 Arolsen (DE); Gottschling, Hartmut, D-3548 Arolsen (DE)
(74) Vertreter: Mende, Eberhard, Dipl.-Ing.

(56) Entgegenhaltungen:
- DE-A- 1 440 829
- FR-A- 1 224 335
- US-A- 2 986 176
- US-A- 4 329 764

## Beschreibung

Die Erfindung betrifft eine Vorrichtung zum Erzeugen von Drilleitern durch Verröbeln von Profildrähten mit eckigem Querschnitt mit einer Führung für die in zwei prallelen Stapeln geförderten Profildrähte, die gebildet ist aus seitlichen Parallelführungsflächen und 90° zu diesen versetzten Drückern, je einer pro Stapel, wobei die beiden Drücker, einander diametral gegenüberliegend, taktweise gegenläufig parallel verschiebbar sind, und aus quer zur Längserstreckung des Drilleiters zur gegenläufigen Verschiebung je eines Profildrahtes von einem auf den benachbarten Stapel unter Kröpfung des Profildrahtes bewegbaren Schiebern, die in der anderen Diagonalen wie die Drücker einander gegenüberliegend gelagert sind, und mit einer Steuerung zur Synchronisation der taktweisen Betätigung der Antriebe für die Verschiebung der Drücker und Schieber.

Eine Vorrichtung mit diesen Merkmalen ist aus der GB-PS 969 086 bekannt. Es handelt sich um eine Vorrichtung zur Herstellung eines zusammengesetzten elektrischen Leiters, bei der die isolierten Einzelleiter von rechteckigem Querschnitt in parallel nebeneinanderliegenden Stapeln ein Röbelwerkzeug durchlaufen. Am Umfang des aus den gestapelten Profildrähten gebildeten Strangs greifen Schieber an, welche den jeweils zuoberst bzw. zuunterst liegenden Profilleiter auf den benachbarten Stapel unter Kröpfung desselben verschieben. Diesen Vorgang, der ein Verdrillen von eckigen Profilleitern ermöglicht, nennt man "Verröbeln" und das Werkzeug wird nach dem Erfinder Röbel als Röbelwerkzeug bezeichnet.

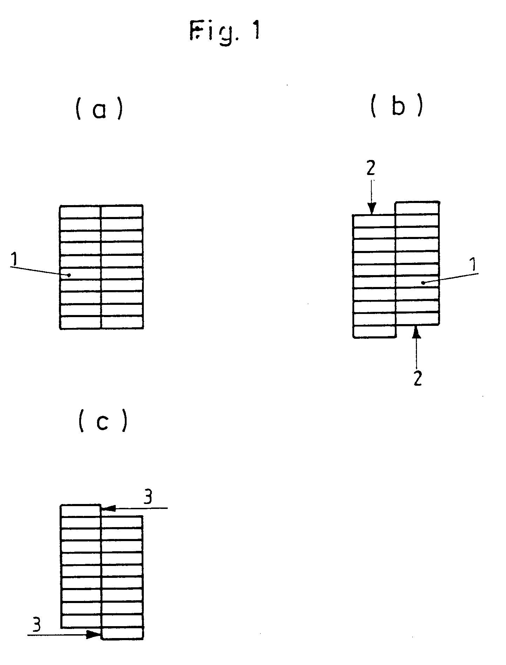

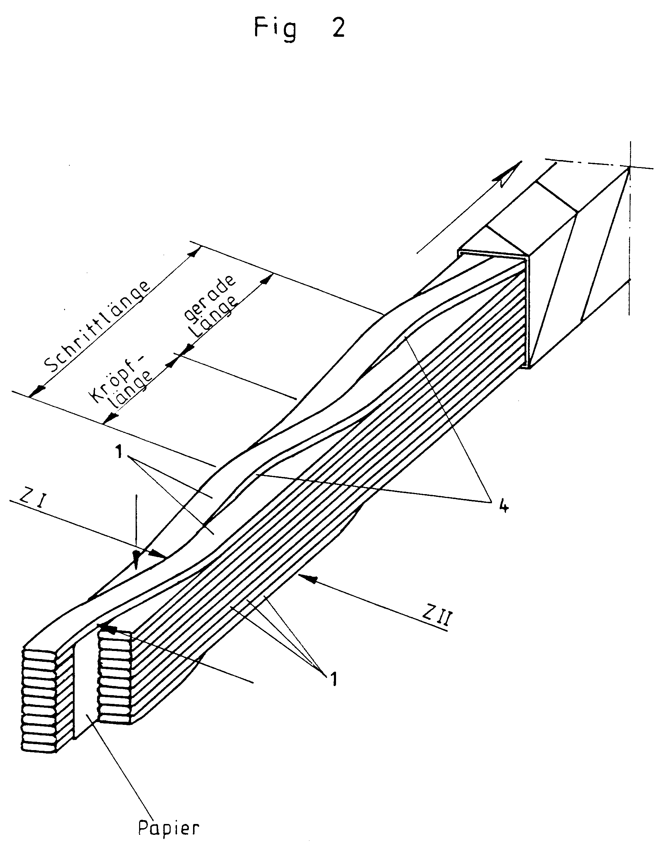

Das bekannte Röbelwerkzeug hat neben den beiden Schiebern zum Verschieben des oberen und unteren Profildrahtes auf den benachbarten Stapel ferner zwei Drücker, welche jeweils einen Stapel der Einzelleitern nach oben bzw. nach unten drücken. Nach Beendigung dieses Drückvorgangs greifen die Schieber zum Verschieben der Profildrähte in der geschilderten Weise an. Den Ablauf beim Verröbeln der Profildrähte des Drilleiters und der so gebildeten Drilleiter sind z.B. in der US-PS 2 249 509 im einzelnen erklärt und in Figur 1 für geradzahlige Drilleiter schematisch dargestellt. Der Bildteil (a) in Fig. 1 zeigt den Ausgangszustand der zwei benachbarten Stapel von Profildrähten 1 von rechteckigem Querschnitt. Durch den Angriff von Drückern, die diametral in Pfeilrichtung 2 an den beiden Stapeln angreifen, werden diese um die Stärke eines Profildrahtes 1 gegeneinander verschoben. Den Endzustand dieser Veschiebung zeigt der Bildteil (b) der Fig. 1. Unmittelbar anschließend wird der zuoberst bzw zuunterst liegende Profildraht in Pfeilrichtung 3 durch Schieber auf den benachbarten Stapel verschoben. Dabei werden die beiden Profildrähte gekröpft. Einen solchen unter Kröpfung der jeweils zuoberst bzw. zuunterst liegenden Profildrähte verdrillten oder verröbelten Drilleiter zeigt Fig. 2 perspektivisch. Die Kröpfstellen sind mit 4 bezeichnet.

Nachteilig an der bekannten Vorrichtung ist, daß die Kröpflänge, das ist die Länge vom Beginn bis zum Ende einer Kröpfung, verhältnismäßig groß ist. Das führt bei gleicher Schrittlänge, das ist die Entfernung zwischen aufeinanderfolgenden Kröpfungen, zu entsprechend kurzen parallelen Längen der Profildrähte, wodurch die Wickeleigenschaften, insbesondere bei Drilleitern mit einer hohen Anzahl von Profildrähten, verschlechtert wird. Verlängert man die parallelen Abschnitte der Profildrähte, so wird die Schrittlänge entsprechend länger und damit verschlechtert sich die Wickeleigenschaft auch.

Zur Behebung des geschilderten Nachteils liegt der Erfindung die Aufgabe zugrunde, beim Verdrillen von Profildrähten mit eckigem Querschnitt die Kröpflänge und damit die Schritt- und Schlaglänge des Drilleiters möglichst kurz zu halten. So kann die Wickelbarkeit des Drilleiters verbessert werden und insbesondere kleinere Wickeldurchmesser lassen sich verwirklichen, wodurch eine kompaktere Bauweise erzielbar ist.

Zur Lösung dieser Aufgabe wird bei der gattungsgemäßen Vorrichtung mit den eingangs genannten Merkmalen erfindungsgemäß vorgeschlagen, daß jedem Schieber ein Gegenhalter auf der gegenüberliegenden Seite des Drilleiters zugeordnet ist, der in Förderrichtung der Drilleiter zum Schieber versetzt und gegenläufig zu diesem quer zum Drilleiter verschiebbar gelagert ist und synchron zu der Bewegung der Schieber und Drücker angetrieben ist.

Durch den erfindungsgemäßen Einsatz von Gegenhaltern, die mit den Schiebern beim Kröpfen des jeweils zuoberst oder zuunterst auf dem Stapel liegenden Profildrahtes kann die Kröpflänge verkürzt und die Kröpfung auch exakter ausgeführt werden als bei Verwendung des bekannten Röbelwerkzeugs gemäß GB-PS 969 086.

Ein weiterer sich durch die Verwendung der erfindungsgemäßen Vorrichtung ergebender Vorteil besteht darin, daß sich der Profildraht beim Verkröpfen mittels des Schiebers nicht mehr am benachbarten Profildraht abstützt sondern eben am Gegenhalter, wodurch Beschädigungen der Isolation an den Berührungsstellen der benachbarten Profildrähte vermieden werden.

Gemäß einer bevorzugten Ausgestaltung der erfindungsgemäßen Vorrichtung sind der Schieber und/oder der zugehörige Gegenhalter parallel zum Drilleiter relativ zueinander verschiebbar gelagert. Auf diese Weise läßt sich der Abstand zwischen Schieber und zugehörigem Gegenhalter und damit die Kröpflänge variieren.

Bevorzugt wird es bei der erfindungsgemäßen Vorrichtung ferner, daß Schieber, Gegenhalter und Drücker durch hydraulische oder pneumatische Antriebe elektronisch gesteuert synchron bewegbar sind. Auf diese Weise ist eine individuelle Betätigung der Einzelelemente des Röbelwerkzeugs, verbunden mit einem fein abstimmbaren, also synchronen Zusammenwirken-ermöglicht. Gegenüber der rein mechanischen Betätigung der Werkzeugelemente, wie sie aus der GB-PS 969 086 bekannt ist, bestehend aus miteinander zusammenwirkenden Nocken, Exzentern und einem gemeinsamen die Synchronisation der Werkzeugelemente bewirkenden Zahnkranz, liegen bei der bevorzugten pneumatischen oder hydraulischen Antriebsweise die Vorteile darin, daß eine feiner abstimmbare und einfachere Steuerung erreichbar ist und daß kein Verschleiß an den Antriebselementen (Nocken/Exzenter/Zahnkranz) auftritt, die eine Nachjustierung erforderlich macht.

Bevorzugt wird es bei der erfindungsgemäßen Vorrichtung ferner, daß die Schieber und Gegenhalter mit einstellbarem Druck am Drilleiter liegen, um die definierte Lage am Drilleiter beizubehalten und ihm bei einer Auslenkung desselben nachgiebig federnd folgen zu können.

Gemäß einer weiteren vorteilhaften Ausgestaltung der erfindungsgemäßen Vorrichtung soll auf der Abtastfläche der Schieber und Gegenhalter ein Distanzplättchen mit einer der Dicke eines Profildrahtes entsprechende Stärke lösbar befestigt sein. Auf diese Weise gelingt es durch einfaches Auswechseln des Distanzplättchens die Vorrichtung an unterschiedlich dimensionierte Profildrähte, die zu einem Drilleiter verröbelt werden sollen, anzupassen. Statt des Auswechselns des Distanzplättchens ist es gemäß einer vorteilhaften Ausgestaltung der Erfindung jedoch auch mögliche das Distanzplättchen höhenverstellbar zu lagern und z.B. durch Schrauben zur Veränderung der Stärke zu verstellen.

Anhand der Zeichnung wird die Erfindung näher erläutert.

Es zeigen
Figur 3 eine perspektivische Ansicht des Röbelwerkzeugs,
Figur 4 eine perspektivische Ansicht des Schiebers,
Figur 5 eine perspektivische Ansicht des Gegenhalters,
Figur 6 das Bewegungsablaufschema der Röbelwerkzeugelemente.
Figur 7 das Röbelwerkzeug mit hydraulischen Antrieben.

Das Röbelwerkzeug umfaßt zwei Schieber 5 und zwei umgekehrt diametral zu den Schieber 5 am Drilleiter ansetzende Drücker 6. Der synchrone Bewegungsablauf der Schieber 5 und Drücker 6 wird über den gemeinsamen Antriebszahnkranz 7 bewirkt.

Zusätzlich zu den Schiebern 5 und Drückern 6 sind Gegenhalter 8 angeordnet, die in Förderrichtung 9 zu dem ihnen jeweils zugeordneten Schieber 5 beabstandet sind. Jeder Gegenhalter 8 besitzt eine Fläche und einen dazu im rechten Winkel abgewinkelten Finger 11, der wie der Schieber 5 eine Abtastfläche 12 bildet. Mit diesen Abtastflächen 12 liegen Schieber 5 und Gegenhalter 8 an der jeweiligen Stapeloberfläche unter einstellbarem Druck, z.B. durch Federn.

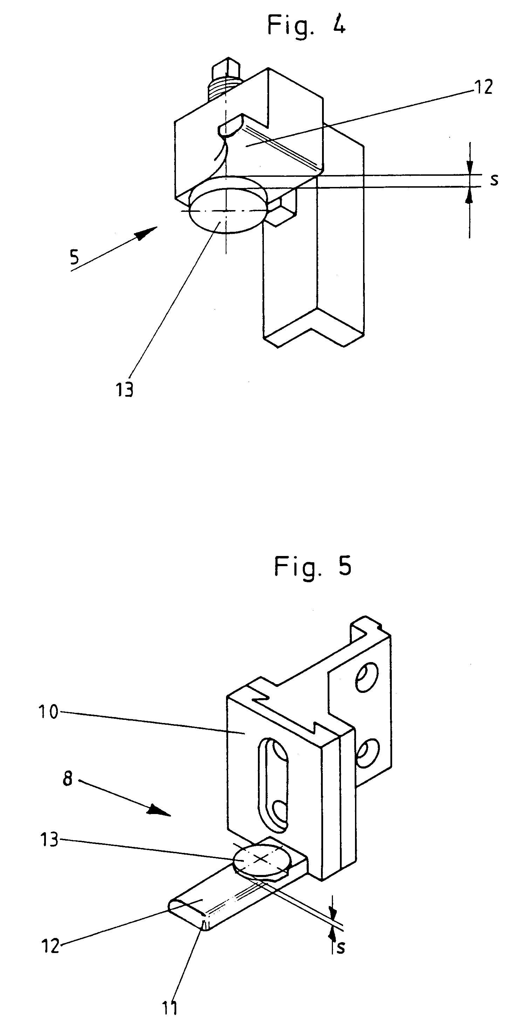

Ebenso ist jeder Schieber 5 und jeder Gegenhalter 8 mit einem Distanzplättchen 13 versehen, das lösbar auswechselbar oder höhenverstellbar gelagert ist. Z.B. kann das Distanzplättchen, wie Fig 4 zeigt, an einer Klemmschraube befestigt sein. Durch Drehen der Stellschraube läßt sich die Stärke s des Distanzplättchens 13 verändern. Diese Distanzplättchen 13 haben eine Stärke s, welche der Dicke eines Profildrahtes 1 entsprechen bzw. etwas geringer ist als diese. Die Distanzplättchen 13 können gewechselt werden, wenn Drilleiter aus Profildrähten mit einer anderen Dicke erzeugt werden.

Die Gegenhalter 8 können über verstellbare Nocken 14, 15 und Exzenterscheiben 16, 17 verändert werden.

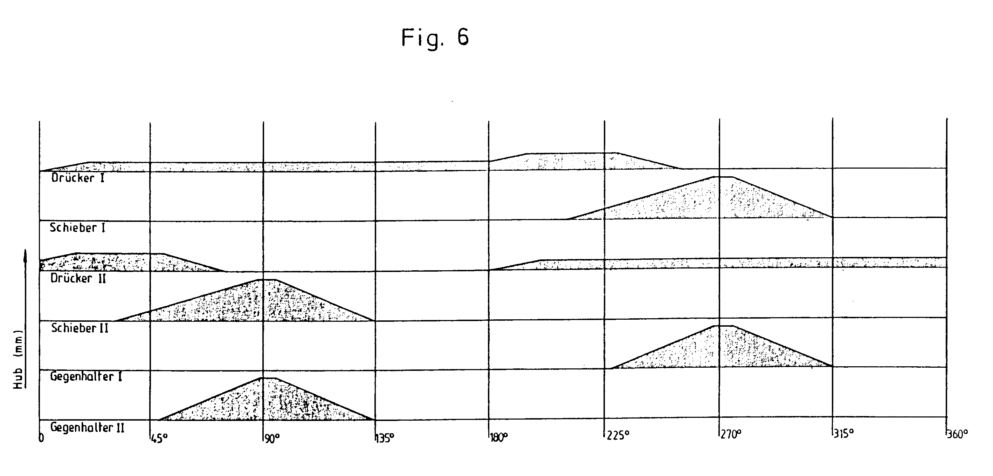

Figur 6 zeigt das Bewegungsablaufschema beim taktweisen Betätigen der Elemente des Röbelwerkzeugs, nämlich Schieber, Drücker und Gegenhalter bei einer ungeraden Zahl von Profildrähten im Drilleiter. Danach beginnt der Takt mit der Relativverschiebung der beiden Stapel von Profildrähten mittels der Drücker I, II in Parallelrichtung gegeneinander, dann treten die einander zugeordneten Schieber II und Gegenhalter II in Aktion, um den überstehenden profildraht auf den benachbarten Stapel zu schieben, wobei er gekröpft wird. Nach 180°-Drehung des Zahnkranzes 7 treten dann Schieber I und zugeordneter Gegenhalter I in Aktion, um dann einen Profildraht auf der gegenüberliegenden Seite unter Kröpfung zu verschieben. Das Bewegungsschema in Figur 6 entspricht dem in Figur 1, dort allerdings für eine geradzahlige Anzahl von Profildrähten.

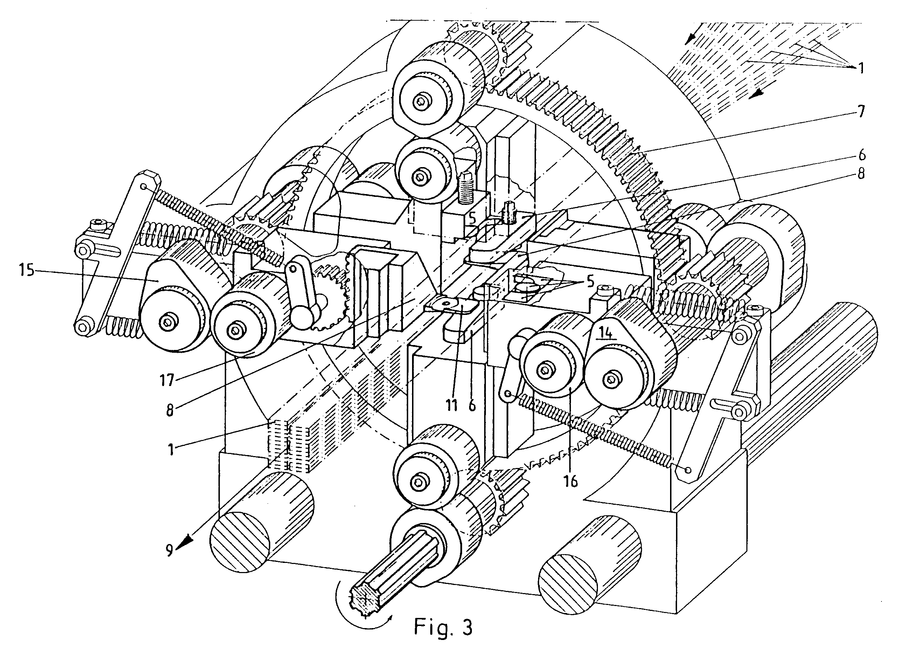

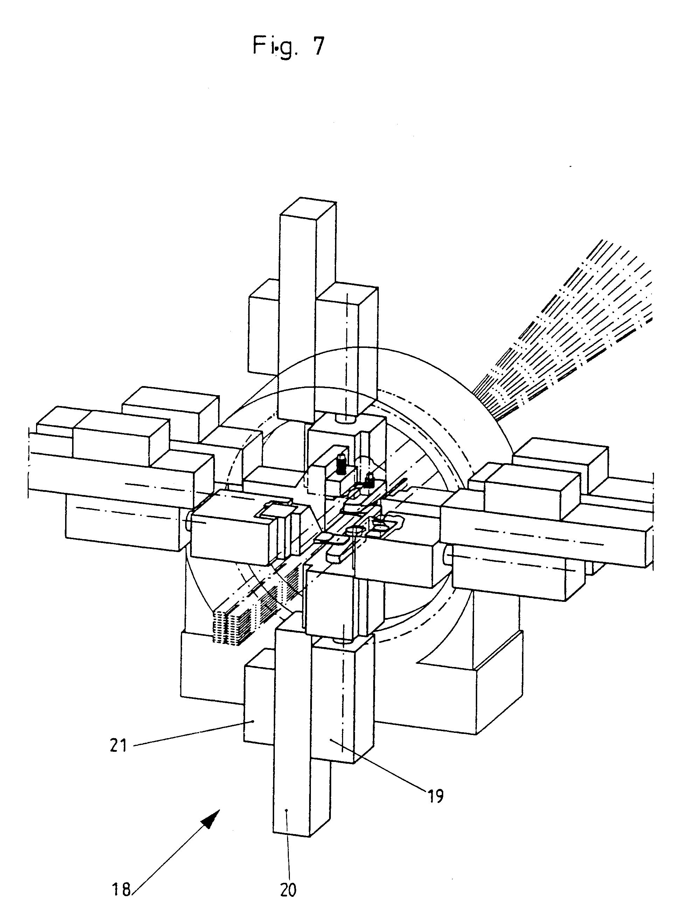

Figur 7 zeigt schematisch die pneumatische oder hydraulische Betätigung der Elemente des Röbelwerkzeugs mittels einer Hydraulikeinheit 18, bestehend aus einem Hydraulikzylinder 19, dem Wegeventil 20 und dem elektrischen Anschlußkasten 21. Der Aufbau des Röbelwerkzeugs entspricht im übrigen dem in Fig. 3 dargestellten.

### Bezugszeichenliste

- 1: - Profildraht
- 2: - Pfeilrichtung (Drücker)
- 3: - Pfeilrichtung (Schieber)
- 4: - Kröpfstelle
- 5: - Schieber
- 6: - Drücker
- 7: - Antriebszahnkranz
- 8: - Gegenhalter
- 9: - Förderrichtung
- 10: -
- 11: - Finger
- 12: - Abtastfläche
- 13: - Distanzplättchen
- 14: - Nocken
- 15: - Nocken
- 16: - Exzenter
- 17: - Exzenter
- 18: - Hydraulikeinheit
- 19: - Hydraulikzylinder
- 20: - Wegeventil
- 21: - elektrischer Anschlußkasten

## Patentansprüche

1. Vorrichtung zum Erzeugen von Drilleitern durch Verröbeln von Profildrähten (1) mit eckigem Querschnitt mit einer Führung für die in zwei prallelen Stapeln geförderten Profildrähte (1), die gebildet ist aus seitlichen Parallelführungsflächen und 90° zu diesen versetzten Drückern (6), je einer pro Stapel, wobei die beiden Drücker (6), einander diametral gegenüberliegend, taktweise gegenläufig parallel verschiebbar sind, und aus quer zur Längserstreckung des Drilleiters zur gegenläufigen Verschiebung je eines Profildrahtes (1) von einem auf den benachbarten Stapel unter Kröpfung des Profildrahtes (1) bewegbaren Schiebern (5), die in der anderen Diagonalen wie die Drücker einander gegenüberliegend gelagert sind, und mit einer Steuerung zur Synchronisation der taktweisen Betätigung der Antriebe für die Verschiebung der Drücker (6) und Schieber (5),
**dadurch gekennzeichnet,** daß jedem Schieber (5) ein Gegenhalter (8) auf der gegenüberliegenden Seite des Drilleiters zugeordnet ist, der in Förderrichtung (9) der Drilleiter zum Schieber (5) versetzt und gegenläufig zu diesem quer zum Drilleiter verschiebbar gelagert ist und synchron zu der Bewegung der Schieber (5) und Drücker (6) angetrieben ist.

2. Vorrichtung nach Anspruch 1,
**dadurch gekennzeichnet,** daß Schieber (5) und/oder zugehöriger Gegenhalter (8) parallel zur Längserstreckung des Drilleiters relativ zueinander verschiebbar gelagert sind.

3. Vorrichtung nach Anspruch 1 oder 2,
**dadurch gekennzeichnet,** daß Schieber (5), Gegenhalter (8) und Drücker (6) durch hydraulische oder pneumatische Antriebe elektronisch gesteuert synchron bewegbar sind.

4. Vorrichtung nach einem der Ansprüche 1 bis 3,
**dadurch gekennzeichnet,** daß auf der Abtastfläche (12) der Schieber (5) und Gegenhalter (8) ein Distanzplättchen (13) mit einer der Dicke eines Profildrahtes (1) entsprechenden Stärke (s) lösbar befestigt ist.

5. Vorrichtung nach Anspruch 1,
**dadurch gekennzeichnet,** daß das Distanzplättchen (13) zur Veränderung der Stärke (s) höhenverstellbar gelagert ist.

6. Vorrichtung nach einem der Ansprüch 1 bis 5,
**dadurch gekennzeichnet,** daß die Schieber (5) und Gegenhalter (8) mit einstellbarem Druck an dem Drilleiter liegen.

## Claims

1. Device for producing twisted conductors by transposition of profiled wires (1) having a polygonal cross-section, having a guide for the profiled wires (1) which are conveyed in two parallel stacks, which guide is formed from lateral parallel guide surfaces and pushers (6) which are offset through 90° with respect to said parallel guide surfaces and of which there is in each case one per stack, the two pushers (6), located diametrically opposite one another, being displaceably cyclically parallel to one another in opposite directions, and from slides (5) which can move transversely with respect to the longitudinal extent of the twisted conductor for mutual displacement in opposite directions of in each case one profiled wire (1) from one stack to the other with the profiled wire (1) being bent, and are supported opposite one another in the other diagonal from that of the pushers, and having a controller for synchronization of the cyclic operation of the drives for the displacement of the pushers (6) and slides (5), characterized in that an opposing holder (8) is allocated to each slide (5), which opposing holder (8) is on the opposite side of the twisted conductor, is offset with respect to the slide (5) in the conveying direction (9) of the twisted conductors, is supported such that it can be displaced transversely with respect to the twisted conductor in the opposite direction to said slide (5), and is driven in synchronism with the movement of the slides (5) and pushers (6).

2. Device according to Claim 1, characterized in that the slides (5) and/or the associated opposing holders (8) are supported such that they can be displaced relative to one another parallel to the longitudinal extent of the twisted conductor.

3. Device according to Claim 1 or 2, characterized in that the slides (5), opposing holders (8) and pushers (6) can be moved synchronously, controlled electronically, by hydraulic or pneumatic drives.

4. Device according to one of Claims 1 to 3, characterized in that a spacer platelet (13) having a thickness (s) corresponding to the thickness of a profiled wire (1) is detachably mounted on the sensing area (12) of the slides (5) and opposing holders (8).

5. Device according to Claim 1, characterized in that the spacer platelet (13) is supported such that its height can be adjusted in order to vary the thickness (s).

6. Device according to one of Claims 1 to 5, characterized in that the slides (5) and opposing holders (8) rest on the twisted conductor with an adjustable pressure.

## Revendications

1. Dispositif de production de conducteurs toronnés par ondulation de fils profilés (1) de section rectangulaire au moyen d'un guidage pour les fils profilés (1) qui avancent dans deux piles parallèles, guidage qui est formé de surfaces latérales de guidage parallèles et de poussoirs (6) décalés de 90° par rapport à ces surfaces, poussoirs dont il y a un par pile, les deux poussoirs (6), situés diamétralement en face l'un de l'autre, pouvant coulisser en cadence parallèlement l'un à l'autre et en sens opposé, ainsi que de coulisseaux (5) qui peuvent se déplacer transversalement à l'extension longitudinale du conducteur toronné pour faire passer mutuellement chaque fois un fil profilé (1) d'une pile sur la pile voisine en ondulant le fil profilé (1) et qui sont placés en face l'un de l'autre sur les autres diagonales que les poussoirs, ainsi qu'au moyen d'une commande de synchronisation du mouvement cadencé des mécanismes d'entrainement pour le coulissement des poussoirs (6) et des coulisseaux (5),
dispositif caractérisé par le fait qu'à chaque coulisseau (5) correspond, du côté opposé du conducteur toronné, une butée (8) qui est placée décalée par rapport au coulisseau (5) dans le sens d'avancement (9) des conducteurs toronnés et qui peut coulisser, transversalement au conducteur toronné, en sens opposé au coulisseau, et qui est entrainé en synchronisme avec le mouvement des coulisseaux (5) et des poussoirs (6).

2. Dispositif selon la revendication 1,
caractérisé par le fait que les coulisseaux (5) et/ou les butées correspondantes (8) sont placés de façon à pouvoir coulisser relativement l'un à l'autre, parallèlement à l'extension longitudinale du conducteur toronné.

3. Dispositif selon la revendication 1 ou 2,
caractérisé par le fait que les coulisseaux (5), les butées (8) et les poussoirs (6) peuvent se déplacer en synchronisme, commandés électroniquement par des mécanismes d'entrainement hydrauliques ou pneumatiques.

4. Dispositif selon l'une des revendications 1 à 3,
caractérisé par le fait que sur la surface d'attouchement (12) des coulisseaux (5) et des butées (8) est fixée, de façon amovible, une plaquette d'écartement (13) d'une épaisseur correspondant à l'épaisseur d'un fil profilé (1).

5. Dispositif selon la revendication 1,
caractérisé par le fait que la plaquette d'écartement (13) est placée réglable en hauteur pour modification de l'épaisseur (s).

6. Dispositif selon l'une des revendications 1 à 5,
caractérisé par le fait que les coulisseaux (5) et les butées (8) appuient avec une pression réglable contre le conducteur toronné.
